# EUROPÄISCHE PATENTSCHRIFT

(11) **EP 0 551 149 B1**
(45) Veröffentlichungstag und Bekanntmachung des Hinweises auf die Patenterteilung: **12.07.1995**
(21) Anmeldenummer: 93104957.1
(22) Anmeldetag: 02.01.1991
(51) Int. Cl.: B62H 5/00, B62J 11/00, F16B 2/08

(54) **Halterung zur Anbringung eines Anbauteils an einem Trägerstab**
Retention device for fixing an extension part on a supporting rod
Point d'attache pour la fixation d'une pièce de montage à un barre de support

(30) Priorität: 09.01.1990 DE 4000430
(43) Veröffentlichungstag der Anmeldung: 14.07.1993
(62) Teilanmeldung aus: 91100095.8
(73) Patentinhaber: Aug. Winkhaus GmbH & Co. KG, 48291 Telgte (DE)
(72) Erfinder: Kortenbrede, Ludger, W-4404 Telgte (DE)
(74) Vertreter: Weickmann, Heinrich, Dipl.-Ing.

(56) Entgegenhaltungen:
- DE-A- 3 201 135
- DE-A- 3 722 760
- DE-U- 8 905 160

## Beschreibung

Die Erfindung betrifft eine Halterung zur Anbringung eines Anbauteils an einem Trägerstab eines Fahrzeugrahmens, z.B. Fahrradrahmens.

Als Anbauteil können die unterschiedlichsten Elemente vorgesehen werden. So ist es beispielsweise möglich, daß das Anbauteil als Befestigungsaufnahme für ein Schloß ausgebildet ist, welches während der Fahrt durch Zusammenkuppeln von zwei Schloßteilen in formschlüssigen Eingriff mit der Befestigungsaufnahme festgelegt ist. Hierdurch wird u.a. erreicht, daß das Schloß während der Fahrt unverlierbar an dem Fahrzeugrahmen festgelegt ist.

Aus der DE-OS 32 12 816 ist eine Halterung für ein Anbauteil bekannt, die aus zwei mit einem Trägerstab bzw. Fahrzeugrahmen durch Schweißen oder Löten fest verbundene, radial von dem Trägerstab abstehende Zapfen gebildet ist, auf die das mit zwei Bohrungen für die Zapfen versehene Anbauteil aufgeschoben werden kann. Die Festlegung des Anbauteils erfolgt durch einen Sicherungsbolzen, der in eine Aufnahmebohrung des Anbauteils einschiebbar ist, die quer zur Erstreckungsrichtung der beiden Bohrungen für die Zapfen und zwischen diesen beiden Bohrungen in der Weise verläuft, daß sie jeweils die Mantelfläche dieser Bohrungen schneidet. Der eingeschobene Bolzen, der dabei in zwei Ringnuten der Zapfen eingreift, verhindert so, daß das Anbauteil von den Zapfen heruntergezogen werden kann.

Diese Halterung ist verhältnismäßig aufwendig herzustellen. Insbesondere muß bei der Fertigung der Querbohrung zur Aufnahme des Sicherungsbolzens darauf geachtet werden, daß die Fertigungsmaße exakt eingehalten werden, da ansonsten bei einer zu großen Bohrung der Sicherungsbolzen bereits bei geringen Erschütterungen herausfallen kann. Darüber hinaus ist die Anbringung ebenfalls umständlich, da der Sicherungsbolzen von der Seite eingeschoben werden muß, was u.U. bei beengten Platzverhältnissen schwierig ist.

Aus dem DE-GM 87 09 155 ist eine Halterung für ein Schloß bekannt, die an dem Trägerstab bzw. Fahrzeugrahmen angeschweißt wird. Die Halterung besteht aus einer Bodenplatte und einem an dieser angeschweißten Zapfen, auf den das Schloß anschließend aufgesteckt wird. Das Schloß kann dann aus einer Freigabestellung in eine Sicherungsstellung um den Zapfen gedreht werden. Damit das Schloß nicht von dem Zapfen herunterfallen kann, wird ein Sperrstift in das Schloßgehäuse eingeschoben, der in eine Ringnut des Zapfens eingreift. Auch diese Halterung ist aufwendig herzustellen und läßt sich nur schwer anbringen, da auch hier eine Montage des Sperrstiftes von der Seite erfolgt. Darüber hinaus kann diese Halterung lediglich für Schlösser vorgesehen werden.

Aus der DE-U-8 905 160 ist eine Halterung für ein Schloß bekannt wobei die Halterung eine an dem Fahrzeugrahmen angebrachte oder anzubringende Befestigungsaufnahme mit einer Ringöse umfaßt.

Es ist Aufgabe der vorliegenden Erfindung, eine Halterung zur Anbringung eines Anbauteils an einem Trägerstab, insbesondere einem Trägerstab eines Fahrzeugrahmens, z.B. Fahrradrahmens zu schaffen, die sich bei einfachem Aufbau leicht in der gewünschten Position am Trägerstab anbringen läßt.

Die Lösung der oben genannten Aufgabe erfolgt durch ein vom Trägerstab im wesentlichen radial abstehendes Formstück, eine Ausnehmung in dem Anbauteil zum Aufschieben auf das Formstück und den Boden der Ausnehmung durchsetzende Schraubmittel zum Festlegen des Anbauteils. Da das Schraubmittel nicht, wie beim Stand der Technik, quer zur Aufschieberichtung des Anbauteils angesetzt werden muß, ist also bei dieser Lösung die Anbringung besonders einfach.

Eine weitere Vereinfachung der Anbringung des Anbauteils bzw. ein einfaches Ansetzen der Schraubmittel wird dadurch erreicht, daß das Formstück eine im wesentlichen radial bezüglich der Trägerstabachse verlaufende Gewindebohrung aufweist und daß in dem Anbauteil eine den Boden der Ausnehmung durchsetzende Kopfschraube aufgenommen ist.

Damit sich das Anbauteil nach Anbringen an dem Formstück nicht verdrehen kann, wird weiterhin vorgeschlagen, daß das Formstück und die Ausnehmung durch aufeinanderliegende Formschlußflächen gegen Verdrehung um eine zur Achse des Trägerstabs querliegende Achse der Schraubmittel gesichert sind.

Damit das Formstück teilweise vom Gewicht des Anbauteils entlastet wird, ist weiterhin vorgesehen, daß der Endbereich des Anbauteils eine dem Trägerquerschnitt angepaßte, insbesondere zylindrische, Anlagefläche aufweist. Als Anbauteil können auch hier die unterschiedlichsten Gegenstände vorgesehen werden. So ist es beispielsweise denkbar, daß das Anbauteil als Befestigungsaufnahme für ein Schloß ausgebildet ist, welches während der Fahrt durch Zusammenkuppeln von zwei Schloßteilen in formschlüssigen Eingriff mit der Befestigungsaufnahme festgelegt ist. Hierdurch wird erreicht, daß das Schloß während der Fahrt unverlierbar mit dem Fahrzeugrahmen verbunden ist.

Um zu verhindern, daß die Halterung bei aufgesetztem Schloß abnehmbar ist, ist es vorteilhaft, daß die Spannmittel bei angekuppeltem Schloß durch mindestens einen der Schloßteile für eine Lösebewegung unzugänglich gemacht werden.

Weitere vorteilhafte Ausgestaltungen der Erfindung und Ausführungsbeispiele werden an Hand der Zeichnung erläutert. Es zeigt:
- Fig. 1: eine teilweise geschnittene Draufsicht auf eine Halterung mit eingesetztem Schloß;
- Fig. 2: eine Ansicht in Richtung des Pfeils Y der Fig.1, wobei das Schloß entfernt ist;
- Fig. 3: eine Ansicht in Richtung des Pfeils Z der Fig.1, wobei ebenfalls das Schloß entfernt ist; und
- Fig. 4: einen Längsschnitt entlang der Linie X-X in Fig. 3.

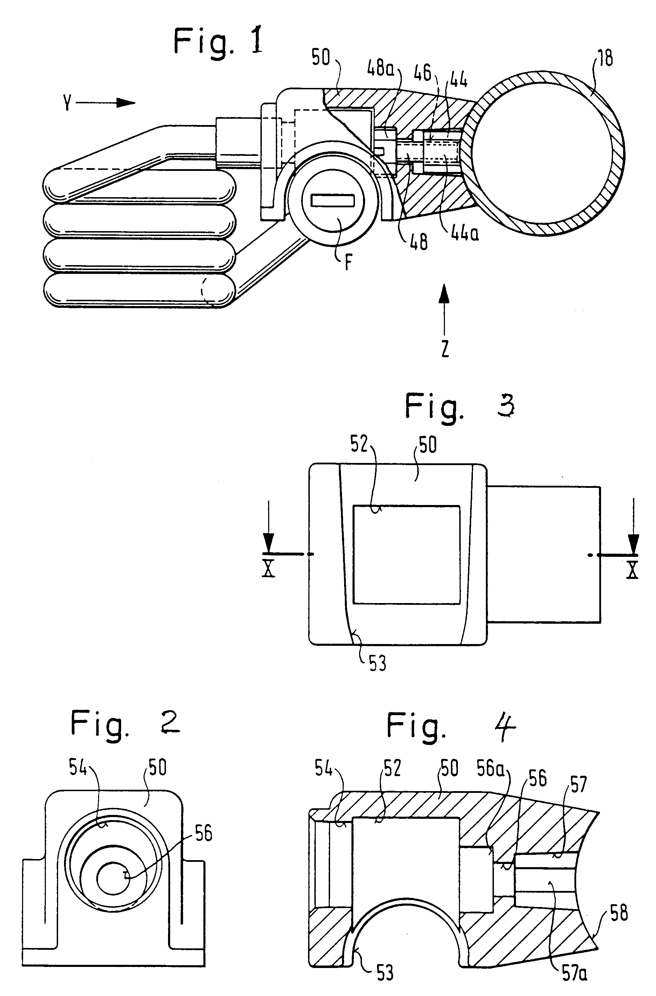

In den Fig. 1 bis 4 ist eine Ausführungsform dargestellt. Hierbei ist an dem Trägerstab 18, der auch in diesem Fall ein Abschnitt eines Fahrradrahmens sein kann, ein Formstück 44 angeschweißt oder angelötet. Dieses Formstück 44 ist mit einem Innengewinde 46 versehen, in das die Schraube 48 zur Fixierung eines weiteren Anbauteils 50 eingedreht werden kann. Bei einem entsprechend dickwandigen Trägerstab 18 kann anstelle des Formstückes 44 dieser Trägerstab 18 mit einer quer zur Trägerstabachse verlaufenden Bohrung mit Innengewinde versehen werden, in die dann die Schraube 48 zum Fixieren der Schloßaufnahme 50 eingedreht werden kann.

Das Anbauteil 50 dient zur Aufnahme eines Fahrradschlosses F, dessen Schließkloben in einen an der Außenseite des Schloßkörpers angebrachten, quadratischen Steckführungsblock eingeschoben wird. Zur Aufnahme dieses Steckführungsblocks weist die Aufnahme 50 einen den Außenmaßen des Steckführungsblockes des Schlosses F angepaßten quadratischen Hohlraum 52 auf. Zur Anlage des zylindrischen Schloßkörpers ist die Aufnahme 50 darüber hinaus mit einer etwa halbkreisförmigen Ausnehmung 53 versehen. Zum Einführen des Schließklobens in Richtung des Pfeiles Y in Fig. 1 ist die Aufnahme 50 schließlich mit einer Durchbrechung 54 versehen, durch die dieser Schließkloben in den Steckführungsblock des Schlosses F eingesteckt werden kann. Auf der zu der Durchgangsbohrung 54 gegenüberliegenden Seite des für den Steckführungsblock dienenden Hohlraums 52 der Aufnahme 50 besitzt diese noch eine weitere, gestufte Bohrung 56, die in einen nach außen hin offenen Aufnahmeraum 57 für das Formstück 44 mündet. Die Bohrungsachse dieser Bohrung 56 verläuft parallel zu der Bohrungsachse der Bohrung 54, ist aber zu dieser seitenversetzt, wie dies aus Fig. 2 hervorgeht. Zum leichteren Aufschieben der Aufnahme 50 auf das Formstück 44 erweitert sich der Aufnahmeraum 57 nach außen hin. Die mit der Öffnung des Aufnahmeraums 57 versehene Seite der Schloßaufnahme 50 weist ebenfalls eine konkave Ausnehmung 58 auf, die als Stützfläche für die Aufnahme 50 zur Abstützung an dem Trägerstab 18 dient. Damit die Schloßaufnahme 50 sich nach Anbringen an dem Trägerstab 18 nicht gegenüber dem Formstück 44 verdrehen kann, ist der Aufnahmeraum 57 und das Formstück 44 mit Formanschlußflächen 44a,57a versehen. In diesem Zusammenhang sei darauf hingewiesen, daß das Formstück 44 auch durch eine Sechskant-Mutter gebildet sein kann.

Das Formstück 44 kann entweder werkseitig an einem Fahrradrahmen angebracht werden, oder aber nachträglich durch Anlöten oder Anschweißen. Nachdem das Formstück 44 an dem Trägerstab 18 bzw. dem Fahrradrahmen befestigt wurde, wird die Aufnahme 50 auf das Formstück 44 aufgeschoben. Anschließend wird durch die Öffnungen 54,56 die Schraube 48 mittels eines Drehwerkzeuges, beispielsweise eines Schraubendrehers, eingeführt und in die Gewindebohrung 46 des Formstücks 44 eingeschraubt. Die Schraube 48 wird dabei soweit eingeschraubt, bis ihr Kopf 48a zur Anlage an dem Absatz 56a der Durchgangsbohrung 56 gelangt. Anschließend kann das Schloß F in die Aufnahme 50 eingesetzt werden. Dies erfolgt so, daß zunächst der zylindrische Schloßkörper mit dem Steckführungsblock voraus in den quaderförmigen Hohlraum 52 der Aufnahme 50 in Richtung des Pfeiles Z in Fig. 1 eingeschoben wird. Anschließend wird von der Seite in Richtung des Pfeiles Y in Fig. 1 der Schließkloben eingeschoben und in dem Steckführungsblock verriegelt. Nunmehr ist das schloß F in der Aufnahme 50 festgelegt, wobei gleichzeitig die Schraube 48 durch den Schloßkörper verdeckt ist, so daß die Aufnahme 50 bei eingesetztem Schloß F nicht von dem Trägerstab 18 abgenommen werden kann.

## Patentansprüche

1. Halterung zur Anbringung eines Anbauteils (50) an einem Trägerstab (18) eines Fahrzeugrahmens, z.B. Fahrradrahmens, **gekennzeichnet** durch ein vom Trägerstab (18) im wesentlichen radial abstehendes Formstück (44), eine Ausnehmung (57) in dem Anbauteil (50) zum Aufschieben auf das Formstück (44) und den Boden der Ausnehmung (57) durchsetzende Schraubmittel (48) zum Festlegen des Anbauteils (50).

2. Halterung nach Anspruch 1, **dadurch gekennzeichnet**, daß das Formstück (44) eine im wesentlichen radial bezüglich der Trägerstabachse verlaufende Gewindebohrung (46) aufweist und daß in dem Anbauteil (50) eine den Boden der Ausnehmung (57) durchsetzende Kopfschraube (48) aufgenommen ist.

3. Halterung nach Anspruch 1 oder 2 , **dadurch gekennzeichnet**, daß das Formstück (44) und die Ausnehmung (57) durch aufeinanderliegende Formschlußflächen (44a,57a) gegen Verdrehung um eine zur Achse des Trägerstabes querliegende Achse der Schraubmittel (48) gesichert sind.

4. Halterung nach einem der Ansprüche 1 - 3 , **dadurch gekennzeichnet**, daß der Endbereich des Anbauteils (50) eine dem Trägerstabquerschnitt angepaßte, insbesondere zylindrische, Anlagefläche (58) aufweist.

5. Halterung nach einem der Ansprüche 1 - 4 , **dadurch gekennzeichnet**, daß das Anbauteil (50) als Befestigungsaufnahme (50) für ein Schloß (F) ausgebildet ist, welches während der Fahrt durch Zusammenkuppeln von zwei Schloßteilen in formschlüssigem Eingriff mit der Befestigungsaufnahme (16) festgelegt ist.

6. Halterung nach Anspruch 5 , **dadurch gekennzeichnet**, daß die Spannmittel (48) bei angekuppeltem Schloß durch mindestens einen der Schloßteile für eine Lösebewegung unzugänglich gemacht ist.

## Claims

1. A support for attaching an attachment piece (50) to a supporting rod (18) of a vehicle frame, e.g. a bicycle frame, characterized by a shaped piece (44) projecting from the supporting rod (18) substantially radially, a recess (57) in the attachment piece (50) for sliding onto the shaped piece (44) and screw means (48) extending through the base of the recess (57) for fixing of the attachment piece (50).

2. A support according to claim 1, characterized in that the shaped piece (44) comprises a tapped hole (46) extending substantially radially with respect to the supporting rod axis and in that a cap screw (48) extending through the base of the recess (57) is accommodated in the attachment piece (50).

3. A support according to claim 1 or claim 2, characterized in that the shaped piece (44) and the recess (57) are secured by superposed form-fitting faces (44a, 57a) against rotation about an axis of the screw means (48) lying transversely with respect to the axis of the supporting rod.

4. A support according to any one of claims 1 to 3, characterized in that the end area of the attachment piece (50) comprises an especially cylindrical bearing surface (58) conformed to the supporting rod cross section.

5. A support according to any one of claims 1 to 4, characterized in that the attachment piece (50) is constructed as a fastening receptacle (50) for a lock (F), which is fastened during a journey by coupling together of two lock parts in form-fitting engagement with the fastening receptacle (16).

6. A support according to claim 5, characterized in that, when the lock is coupled on, the tension means (48) is made inaccessible for releasing movement by at least one of the lock parts.

## Revendications

1. Fixation pour le montage d'une pièce rapportée (50) sur une barre support (18) d'un châssis de véhicule, par exemple un cadre de bicyclette, caractérisée par une pièce profilée (44) s'écartant sensiblement radialement de la barre support (18), un évidement (57) ménagé dans la pièce rapportée (50) pour l'enfilage sur la pièce profilée (44) et un moyen de vissage (48), traversant le fond de l'évidement (57), pour assurer la fixation de la pièce rapportée (50).

2. Fixation selon la revendication 1, caractérisée en ce que la pièce profilée (44) présente un trou taraudé (46) s'étendant sensiblement radialement par rapport à l'axe de la barre support et en ce que dans la pièce rapportée (50) est logée une vis à tête (48) traversant le fond de l'évidement (57).

3. Fixation selon la revendication 1 ou 2, caractérisée en ce que la pièce profilée (44) et l'évidement (57) sont bloqués au moyen de surfaces à engagement positif (44a, 57a), pour empêcher toute rotation autour d'un axe, orienté transversalement par rapport à l'axe de la barre support, du moyen de vissage (48).

4. Fixation selon l'une des revendications 1 à 3, caractérisée en ce que la zone d'extrémité de la pièce rapportée (50) présente une surface d'appui (58) adaptée à la section transversale de la barre support, en particulier de forme cylindrique.

5. Fixation selon l'une des revendications 1 à 4, caractérisée en ce que la pièce rapportée (50) est réalisée sous forme de logement de fixation (50) pour une serrure (F) qui est fixée pendant un trajet par couplage mutuel de deux parties de serrure, coopérant par engagement positif avec le logement de fixation (16).

6. Fixation selon la revendication 5, caractérisée en ce que les moyens de serrage (48) sont rendus inaccessibles lorsque la serrure est accouplée, en passant à travers au moins l'une des parties de serrure, pour effectuer un mouvement de désolidarisation.
